# EUROPEAN PATENT SPECIFICATION

(11) **EP 3 626 429 B1**
(45) Date of publication and mention of the grant of the patent: **15.09.2021**
(21) Application number: 17910464.1
(22) Date of filing: 08.12.2017
(51) Int. Cl.: B29C 64/124, B29C 64/393, A61C 13/08, A61C 13/34, B33Y 30/00, B33Y 50/02

(54) **LAYERING METHOD FOR THREE-DIMENSIONAL OBJECT DATA, AND 3D PRINTING METHOD AND DEVICE**
SCHICHTUNGSVERFAHREN FÜR DATEN DREIDIMENSIONALER OBJEKTE UND 3D-DRUCK-VERFAHREN UND -VORRICHTUNG
PROCÉDÉ DE MISE EN COUCHES DE DONNÉES D'OBJET EN TROIS DIMENSIONS, ET PROCÉDÉ ET DISPOSITIF D'IMPRESSION 3D

(30) Priority: 17.05.2017 CN 201710350954
(43) Date of publication of application: 25.03.2020
(60) Divisional application: 19219224.3
(73) Proprietor: Shanghai Union Technology Corporation, Shanghai 201612 (CN)
(72) Inventor: YU, Qingxiao, Shanghai 201612 (CN); CHEN, Xianfei, Shanghai 201612 (CN); WANG, Jincheng, Shanghai 201612 (CN)
(74) Representative: Weickmann & Weickmann PartmbB
(86) International application number: PCT/CN2017/115333
(87) International publication number: WO 2018/209928

(56) References cited:
- CN-A- 103 707 510
- CN-A- 104 644 276
- CN-A- 106 217 882
- CN-A- 106 696 296
- CN-A- 107 139 456
- CN-U- 206 011 731
- KR-A- 20130 038 101
- US-A1- 2016 324 730

## Description

### FIELD OF THE INVENTION

The present application relates to the field of 3D printing, in particular to a method and apparatus for layering three-dimensional object data, and a 3D printing method and apparatus.

### BACKGROUND OF THE INVENTION

3D printing is a kind of rapid prototyping technology. It is a technique for constructing objects by layer-by-layer printing using adhesive materials such as a powdered metal, plastic and resin based on a digital model file. A 3D printing apparatus manufactures a 3D object through performing such printing technique. 3D printing apparatus has a wide range of applications in the fields of molds, customized goods, medical appliances, and prostheses due to high forming precision. In addition, compared with a 3D printing apparatus based on top exposure, a 3D printing apparatus based on bottom exposure is more material-saving because that only a thick layer of photocurable material is needed to provide at the bottom of a container, thus the 3D printing apparatus based on bottom exposure is favored by many personalized product manufacturers. Especially for manufacturing artificial teeth, it effectively improves the working efficiency of dental diagnosis and treatment due to the ability to manufacture artificial teeth quickly and accurately.

According to the appearance requirements of doctors and patients on artificial teeth, especially for exposed parts of artificial teeth, during the layer-by-layer printing through a 3D printing apparatus, it needs to meet the requirement that the thickness of each layer is as small as possible. However, if the entire tooth structure is printed according to the appearance requirements on artificial teeth, the printing time will be too long.

The document CN 104 644 276 A shows the preamble of claim 1 and claim 6.

### SUMMARY OF THE INVENTION

The present application provides a method, as disclosed in claim 1, and a 3D apparatus for layering three-dimensional object data, as disclosed in claim 6, and a 3D printing method and apparatus, and solves the problems of taking too much time during a 3D forming stage of artificial teeth, etc.

To achieve the above and other objectives, the present application provides a 3D printing method, the 3D printing method is applied to a 3D printing apparatus, the 3D printing apparatus comprises a container and a component platform, the container is used for containing a photocurable material, wherein, the 3D printing method comprises the following steps: adjusting a spacing between the component platform and a preset reference printing-surface to fill the photocurable material to be cured; curing the photocurable material filled within the spacing into a corresponding patterned cured layer according to a layered image in a tooth model; and repeating the above steps to form a tooth structure on the component platform through accumulation of patterned cured layers, wherein the tooth structure comprises a tooth portion and a tooth holder portion used for supporting the tooth portion; wherein, during a process of printing the tooth structure, a thickness of at least one patterned cured layer for forming the tooth portion is less than a thickness of at least one patterned cured layer for forming the tooth holder portion.

In some embodiments, a thickness of each patterned cured layer for forming the tooth portion is less than a thickness of each patterned cured layer only for forming the tooth holder portion.

In some embodiments, a manner of adjusting a spacing between the component platform and a preset reference printing-surface to fill the photocurable material to be cured comprises: adjusting the spacing between the component platform and the preset reference printing-surface based on a thickness of a cross-sectional layer marked in the tooth model, wherein the tooth model comprises a tooth portion model and a tooth holder portion model used for supporting the tooth portion model; wherein, the marked thickness of the cross-sectional layer comprises a thickness of at least one cross-sectional layer in the tooth portion model and a thickness of at least one cross-sectional layer in the tooth holder portion model, the thickness of at least one cross-sectional layer in the tooth portion model is less than the thickness of at least one cross-sectional layer in the tooth holder portion model.

In some embodiments, a manner of adjusting a spacing between the component platform and a preset reference printing-surface to fill the photocurable material to be cured comprises: adjusting the spacing between the component platform and the preset reference printing-surface at least twice according to a thickness of each cross-sectional layer in the tooth portion model in the tooth model; and/or adjusting the spacing between the component platform and the preset reference printing-surface according to thicknesses of at least two cross-sectional layers in the tooth holder portion model in the tooth model.

In some embodiments, a manner of curing the photocurable material filled within the spacing into a corresponding patterned cured layer according to a layered image in a tooth model comprises: irradiating a layered image corresponding to at least one cross-sectional layer based on which the spacing is adjusted onto the photocurable material filled within the spacing.

The present application provides a method for layering three-dimensional object data, the method comprises the following steps: layering a tooth model to obtain cross-sectional layers forming the tooth model, wherein a layered image of the tooth model at corresponding layer is described in each cross-sectional layer ; wherein the tooth model comprises a tooth portion model and a tooth holder portion model used for supporting the tooth portion model; wherein, during the layering, a thickness of at least one cross-sectional layer in the tooth portion model is set to be less than a thickness of at least one cross-sectional layer in the tooth holder portion model, and/or the tooth portion model, the tooth holder portion model and an intersecting cross-sectional layer therebetween are set.

According to the invention, the method for layering three-dimensional object data further comprises marking the intersecting cross-sectional layer on the tooth model based on an acquired intersecting cross-sectional layer marking instruction; or identifying tooth feature information and/or support feature information in each layered image described in at least partial cross-sectional layers, and determining the intersecting cross-sectional layer between the tooth portion model and the tooth holder portion model based on an identification result.

In some embodiments, a manner of layering a tooth model comprises: layering the tooth model according to a preset layer thickness and marking the intersecting cross-sectional layer; or with the marked intersecting cross-sectional layer as a boundary, layering the tooth portion model according to layer thickness(es) in the tooth portion model, and layering the tooth holder portion model according to layer thickness(es) in the tooth holder portion model.

In some embodiments, a manner of layering a tooth model comprises: setting at least one cross-sectional layer thickness marker for the tooth model.

The present application according to the invention provides a 3D printing apparatus, the 3D printing apparatus comprises a container, used for containing a photocurable material; a component platform, used for attaching a patterned cured layer obtained after irradiation to form a 3D component through accumulation of patterned cured layers; a Z-axis drive mechanism, connected with the component platform and used for adjusting a spacing between the component platform and a preset reference printing-surface in a controlled manner to fill the photocurable material to be cured; an exposure device, used for curing the photocurable material filled within the spacing into a corresponding patterned cured layer according to a layered image in a tooth model to form a corresponding tooth structure, wherein the tooth structure comprises a tooth portion and a tooth holder portion for supporting the tooth portion; and a control device, connected with the Z-axis drive mechanism and used for controlling the Z-axis drive mechanism to adjust the spacing, and satisfying the following conditions during the control of the Z-axis drive mechanism to adjust the spacing: a thickness of at least one patterned cured layer for forming the tooth portion is less than a thickness of at least one patterned cured layer for forming the tooth holder portion; the control device is also connected with the exposure device and is used for controlling the exposure device to irradiate a corresponding layered image.

According to the invention, a thickness of each patterned cured layer for forming the tooth portion is less than a thickness of each patterned cured layer only for forming the tooth holder portion.

According to the invention, the control device comprises a storage unit, the storage unit is configured to store a file of the layered tooth model, wherein the tooth model comprises a tooth portion model and a tooth holder portion model for supporting the tooth portion model.

According to the invention, the storage unit is further configured to store a cross-sectional layer thickness marker and a marker of a model to which a cross-sectional layer belongs, wherein the cross-sectional layer thickness marker is used for identifying a thickness of at least one cross-sectional layer in the tooth portion model; the marked thickness of at least one cross-sectional layer is less than the thickness of at least one cross-sectional layer in the tooth holder portion model; the control device further comprises a processing unit, the processing unit is configured to adjust the spacing between the component platform and the preset reference printing-surface based on the stored cross-sectional layer marker and/or marker of a model to which a cross-sectional layer belongs.

In some embodiments, the storage unit is further configured to store an intersecting cross-sectional layer marker, the intersecting cross-sectional layer marker is used for identifying an intersecting cross-sectional layer between the tooth portion model and the tooth holder portion model; the control device further comprises a processing unit, the processing unit is configured to adjust the spacing between the component platform and the preset reference printing-surface based on the tooth portion model in the tooth model determined by the intersecting cross-sectional layer and a thickness of each cross-sectional layer in the tooth portion model; and adjust the spacing between the component platform and the preset reference printing-surface based on the tooth holder portion model in the tooth model determined by the intersecting cross-sectional layer and thicknesses of at least two cross-sectional layers in the tooth holder portion model and the intersecting cross-sectional layer.

In some embodiments, the control device is further used to control the exposure device to irradiate an image based on the adjusted spacing.

The present application further provides an apparatus for layering three-dimensional object data, the apparatus comprises: a storage unit, configured to store a tooth model, wherein the tooth model comprises a tooth portion model and a tooth holder portion model for supporting the tooth portion model; a processing unit, configured to layer the stored tooth model to obtain cross-sectional layers forming the tooth model, wherein a layered image of the tooth model at corresponding layer is described in each cross-sectional layer; wherein, during the layering by the processing unit, a thickness of at least one cross-sectional layer in the tooth portion model is set to be less than a thickness of at least one cross-sectional layer in the tooth holder portion model.

In some embodiments, the processing unit marks at least one cross-sectional layer in the tooth portion model and the tooth holder portion model respectively during the layering; and/or the processing unit differentially marks the cross-sectional layer belonging to the tooth portion model and the cross-sectional layer belonging to the tooth holder portion model during the layering.

In some embodiments, the processing unit is further configured to: identifying tooth feature information or support feature information in each layered image of at least partial layered images; and determining an intersecting cross-sectional layer between the tooth portion model and the tooth holder portion model based on an identification result.

In some embodiments, the processing unit is configured to, with the intersecting cross-sectional layer as a boundary, layer the tooth portion model according to layer thickness(es) in the tooth portion model, and layer the tooth holder portion model according to layer thickness(es) in the tooth holder portion model.

In the method and apparatus for layering three-dimensional object data, and the 3D printing method and apparatus provided in the present application, the actual printing requirement of considering both a print speed and a refined tooth contour can be achieved through printing the tooth structure in such a printing manner that the thickness of each layer of the tooth portion in the tooth structure is more refined than the thickness of each layer of the tooth holder portion in the tooth structure.

In addition, more refined layer-by-layer printing for the tooth portion can be provided without increasing the difficulty in layering through subdivisional printing of each cross-sectional layer in the tooth portion model.

Furthermore, more rapid layer-by-layer printing for the tooth holder portion can be provided without increasing the difficulty in layering through merged printing of each cross-sectional layer in the tooth holder portion model.

Moreover, the printing apparatus can print the tooth structure more automatically and more autonomously through dividing the tooth portion model and the tooth holder portion model in the tooth model during the layering of the tooth model, and marking or layering the tooth model to facilitate differentially printing of the printing apparatus.

### BRIEF DESCRIPTION OF THE DRAWINGS

Fig. 1 is a schematic diagram of structure of a 3D printing apparatus of the present application in an embodiment.
Fig. 2 is a schematic diagram of structure of a 3D printing apparatus of the present application in another embodiment.
Fig. 3 is a schematic diagram of structure of a tooth structure of the present application in an embodiment.
Fig. 4 is a schematic diagram of structure of a control device in a 3D printing apparatus of the present application in an embodiment.
Fig. 5 is a flow diagram of a 3D printing method of the present application in an embodiment.
Fig. 6 is a schematic diagram of layering structure of a cross-sectional layer when the cross-sectional layer in a tooth model is layer-by-layer printed by a 3D printing method of the present application in an embodiment.
Fig. 7 is a schematic diagram of merged structure of a cross-sectional layer when the cross-sectional layer in a tooth model is merged printed by a 3D printing method of the present application in an embodiment.
Fig. 8 is a flow diagram of a layering method of the present application in an embodiment.
Fig. 9 is a flow diagram of a layering method of the present application in another embodiment.
Fig. 10 is a flow diagram of a layering method of the present application in yet another embodiment.
Fig. 11 is a schematic diagram of structure of a layering apparatus of the present application in an embodiment.

### DETAILED DESCRIPTION OF THE EMBODIMENTS

Embodiments of the present application will be described below with specific examples, and other advantages and effects of the present application will be apparent to those skilled in the art from the disclosure in the specification. The present application can be carried out or applied in other different embodiments, and various modifications or changes can also be made to the details of the specification based on different ideas and applications without departing from the spirit of the present application.

It should be noted that the structures, proportions, sizes and the like shown in the accompanying drawings of the specification are only used in conjunction with the disclosure of the specification for understanding and reading by those skilled in the art, and are not intended to limit the conditions for implementing the present application, and thus have no technically substantive meaning. Any structural modification, proportional relationship change or size adjustment should be encompassed within the scope that can be covered by the technical content disclosed in the present application if they do not affect the effects and objectives achieved by the present application. Moreover, the terms "upper", "lower", "left", "right", "intermediate" and "a/an" as used in this specification are also for convenience of clear description, and are not intended to limit the scope for implementing the present application. Changes or adjustments of relative relationship thereof are also considered to be within the scope for implementing the present application if there is no substantive change in technical content.

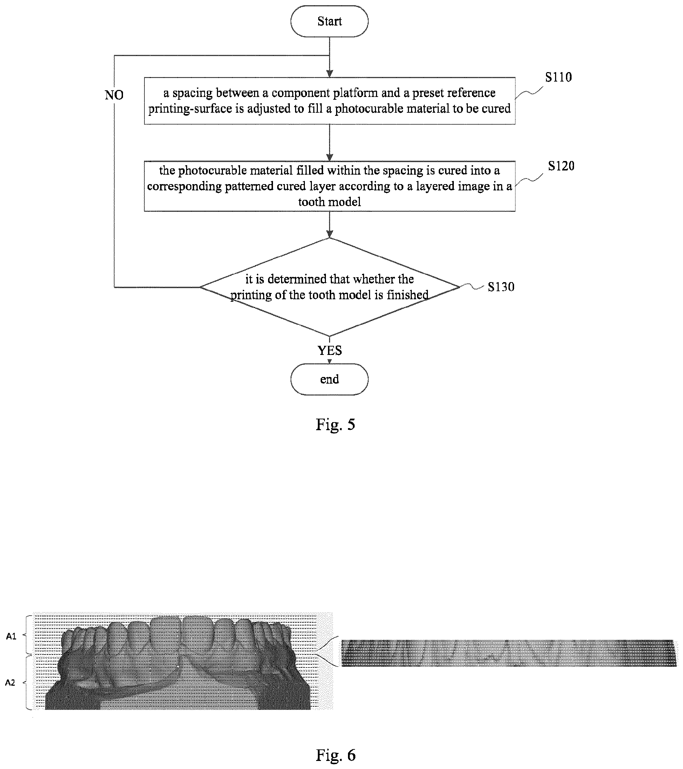

Please refer to Figs. 1-7, Figs. 1 and 2 are respectively exemplary schematic diagrams of structure of a 3D printing apparatus provided in the present application, and Fig. 5 is a flow diagram of a 3D printing method of the present application in an embodiment. The 3D printing apparatus that performs the 3D printing method in the present application at least includes a container and a component platform. To perform the method automatically and with high precision, the 3D printing apparatus further includes a Z-axis drive mechanism, an exposure device and a control device. The 3D printing apparatus may be a printing apparatus based on SLA (i.e. stereo lithography appearance) technology; or a printing apparatus based on DLP (i.e. digital light processing) technology.

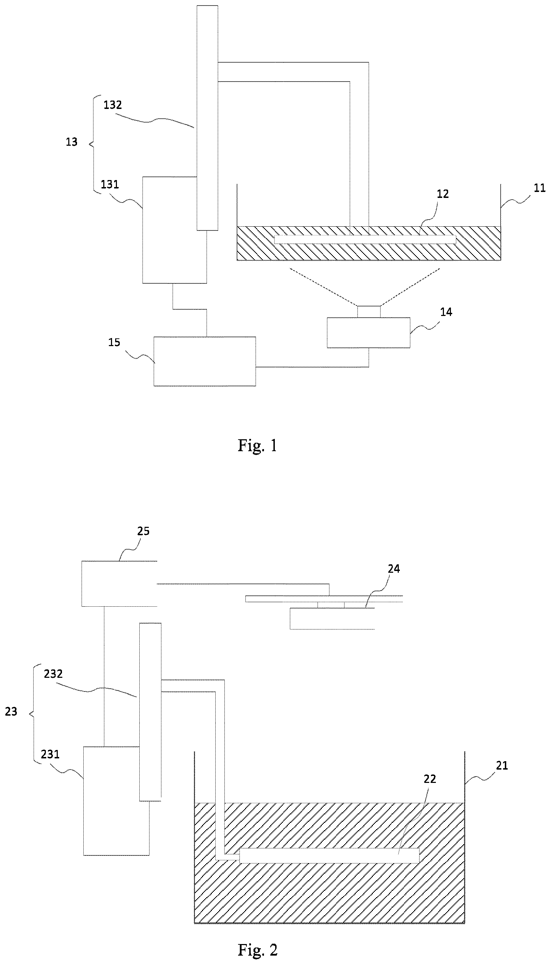

The container (11, 21) is used for containing a photocurable material, wherein the photocurable material includes any liquid material or powder material that is easily photocurable. For example, the liquid material includes a photocurable resin liquid, or a resin liquid doped with a mixed material such as an additive, pigment, dye and the like. The powder material includes but is not limited to ceramic powder, color added powder, and the like. The material of the container includes but is not limited to glass, plastic, resin and the like. The capacity of the container depends on the type of 3D printing apparatus. For example, referring to Figs. 1 and 2, the capacity of the container 21 in the SLA-based printing apparatus is larger than the capacity of the container 11 in the DLP-based printing apparatus. The container 11 in the SLA-based printing apparatus is transparent entirely or only transparent at the bottom of the container, and a transparent flexible film that is easy to be stripped is laid on the bottom surface of the container.

Referring to Figs. 1 and 2, the component platform (12, 22) is used for attaching a patterned cured layer obtained after irradiation to form a 3D component through accumulation of the patterned cured layers. Specifically, the component platform is, for example, a component board. Generally, the component platform takes a preset reference printing-surface located in the container as a starting position, and accumulates each cured layer cured on the reference printing-surface layer by layer to obtain a corresponding 3D printed object. In the present application, the 3D printed object is a tooth structure.

Referring to Figs. 1 and 2, the Z-axis drive mechanism (13, 23) is connected with the component platform (12, 22), and is used for adjusting a spacing between the component platform and the preset reference printing-surface in a controlled manner to fill the photocurable material to be cured. Wherein, the reference printing-surface is a starting surface from which the photocurable material is irradiated. To control the irradiation energy for each cured layer accurately, the Z-axis drive mechanism needs to drive the component platform to move to such a position that the minimum spacing between the component platform and the reference printing-surface is the thickness of the cured layer to be cured. In the DLP-based printing apparatus, the reference printing-surface is the bottom surface of the container, and in the SLA-based printing apparatus, the reference printing-surface is a horizontal surface of the photocurable material determined by pre-calibration.

Taking a Z-axis drive mechanism 23 mounted in the SLA printing apparatus as an example, the Z-axis drive mechanism includes a first drive unit 231 and a first vertical moving unit 232. The first drive unit 231 is used to drive the first vertical moving unit 232, so that the first vertical moving unit 232 makes the component platform to perform ascending or descending movement. For example, the first drive unit 231 is a drive motor. The first drive unit 231 is controlled by a control instruction. The control instruction includes: a directional instruction indicating ascending, descending or stop of the component platform, and even also includes parameter such as a rotating speed/rotating speed acceleration, or torque/torsion, and so on. Thus, this is advantageous for accurately controlling a descending distance of the first vertical moving unit to adjust the Z axis precisely. For example, the first vertical moving unit 232 includes a fixing rod with one end fixed to the component platform, and an mesh type moving component fixed to the other end of the fixing rod, wherein the mesh type moving component is driven by the drive unit to make the fixing rod to move vertically, and the mesh type moving component is, for example, a limit moving component meshed by a gear structure such as a rack or the like, and the fixing rod is as shown in Fig. 2. In another example, the first vertical moving unit 232 includes a screw rod and a positioning moving structure for screwing the screw rod, wherein both ends of the screw rod are screwed to the drive unit, and an extension end of the positioning moving structure is fixedly connected to the component platform, and the positioning moving structure includes: a nut-shaped structure including ball(s) and a clamping part, and the fixing rod.

Taking a Z-axis drive mechanism 13 mounted in the DLP printing apparatus as an example, the Z-axis drive mechanism 13 also includes a second drive unit 131 and a second vertical moving unit 132, wherein the second drive unit 131 is used to drive the second vertical moving unit 132 so that the second vertical moving unit 132 makes the component platform to perform ascending or descending movement. For example, the second drive unit 131 is a drive motor. The second drive unit 131 is controlled by a control instruction. The control instruction includes: a directional instruction indicating ascending, descending or stop of the component platform, and even also includes parameter such as a rotating speed/rotating speed acceleration, or torque/torsion and so on, so as to facilitate for accurate control of an ascending distance of second first vertical moving unit to adjust the Z axis precisely. For example, the second vertical moving unit 132 includes a fixing rod with one end fixed to the component platform, and an mesh type moving component fixed to the other end of the fixing rod, wherein the mesh type moving component is driven by the drive unit to make the fixing rod to move vertically, and the mesh type moving component is, for example, a limit moving component meshed by a gear structure such as a rack or the like, and the fixing rod is as shown in Fig. 1. In another example, the second vertical moving unit 132 includes a screw rod and a positioning moving structure for screwing the screw rod, wherein both ends of the screw rod are screwed to the drive unit, and an extension end of the positioning moving structure is fixedly connected to the component platform, and the positioning moving structure includes: a nut-shaped structure including ball(s) and a clamping part, and the fixing rod.

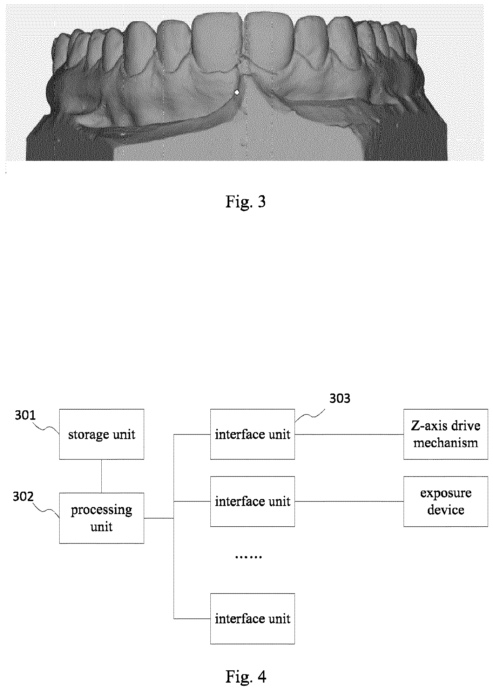

The exposure device is used for curing the photocurable material filled within the spacing into a corresponding patterned cured layer according to a layered image in a tooth model to form a corresponding tooth structure. The obtained tooth structure includes a tooth portion and a tooth holder portion for supporting the tooth portion. The tooth portion contains an entire artificial tooth or a part thereof printed as needed for fabrication. For example, the tooth portion includes an entire artificial tooth with a crown, a neck and a root. As another example, as shown in Fig. 3, the tooth portion only includes a crown and a neck. The tooth holder portion contains a support structure which is printed as needed for fabrication and is used for supporting the tooth portion by gum-like or rod-like structure. For example, as shown in Fig. 3, the tooth holder portion is gum-like, and the tooth portion contains a crown and neck, wherein the tooth holder portion supports the tooth portion in a wrapping manner.

Here, an exposure device 14 in the DLP-based printing apparatus is disposed below the transparent bottom surface of the container, and irradiates the layered image onto the photocurable material within the container from the transparent bottom surface. For example, the exposure device 14 includes a laser emitter, lens and galvanometer scanners (not shown) located on an output laser path of the laser emitter, wherein the lens are used to change the laser path and adjust a focusing position of laser beams, and the galvanometer scanners is used to scan with the laser beams in a two-dimensional space of the bottom surface of the container according to the received layered image in a tooth model, and the photocurable material after being beam scanned is cured into a corresponding patterned cured layer. In another example, the exposure device 14 includes a light source array, a DMD chip and a controller. The light source array includes a plurality of LED light sources, each of which corresponds to a pixel, and the light source array is controlled by the controller and performs an irradiation operation according to the gray scale of each pixel in the layered image. The DMD chip makes the light source corresponding to each pixel on the layered image to irradiate the bottom surface of the container after receiving a control signal from the controller. The DMD chip looks like a small mirror in exterior shape, and is packaged in a closed space formed by a metal and glass. In fact, this mirror is composed of hundreds of thousands or even millions of micromirrors, each micromirror represents a pixel, and a projected image is composed of these pixels. The DMD chip can be simply described as a micromirror and semiconductor optical switch corresponding to pixel, and the controller allows/prohibits light reflection by each micromirror through controlling each optical switch in the DMD chip, thereby irradiating the corresponding layered image onto the photocurable material through the transparent bottom of the container such that the photocurable material corresponding to the image shape is cured to obtain a patterned cured layer.

An exposure device 24 in the SLA-based printing apparatus is disposed above the container 21, and scans, from the opening of the container, the photocurable material within the container according to the layered image. For example, the exposure device 24 is mounted on the top of the printing apparatus, and includes a laser emitter, lens and galvanometer scanners (not shown) located on an output laser path of the laser emitter, wherein the lens are used to change the laser path and adjust a focusing position of laser beams, and the galvanometer scanners is used to irradiate the laser beams, from the opening of the container, onto the surface of the photocurable material according to the received layered image in a tooth model, and scan in a two-dimensional space of the surface, and the photocurable material after being beam scanned is cured into a corresponding patterned cured layer.

Referring to Figs. 1 and 2, the aforementioned Z-axis drive mechanism (13, 23) and exposure device (14, 24) are both controlled by a control device (15, 25), and the control device (15, 25) controls the Z-axis drive mechanism (13, 23) and the exposure device (14, 24) to print the stereoscopic tooth model into a physical tooth structure through performing the printing method. The control device (15, 25) is an electronic device including a processor. For example, the control device is a computer device, an embedded device, or an integrated circuit integrated with a CPU, etc.

Here, the tooth model includes a tooth portion model and a tooth holder portion model for supporting the tooth portion model. The tooth model is derived from a 3D model obtained through scanning a patient's mouth by a doctor, and the tooth portion model is a 3D model for all or part of teeth in the mouth obtained by scanning. For example, the tooth portion model is a 3D model of an entire tooth including a crown, a neck and a root. As another example, the tooth portion model is a 3D model only including a crown and a neck. The tooth holder portion model is a support model provided for preventing deformation of the 3D model of the entire tooth during printing. For example, the tooth holder portion model is a rod-like support model. For another example, the tooth holder portion model is a 3D model of a gum obtained by scanning the mouth. More specifically, the 3D model of the gum is arranged at a corresponding position of a neck model in the tooth portion model according to the scanned patient's image that the gum wraps the neck, and serves as the tooth holder portion model in the tooth portion model during the 3D printing.

To print the tooth model into a physical tooth structure by using the exposure device and the Z-axis drive mechanism, Fig. 4 schematically shows a structure schematic diagram of the control device. The control device includes a storage unit 301, a processing unit 302 and an interface unit 303. The storage unit 301 includes a non-volatile memory and a system bus. The non-volatile memory is, for example, a solid state disk or a USB flash disk, etc. The system bus is used for connecting the non-volatile memory with a CPU, wherein the CPU is integrated in the storage unit 301, or the CPU and the storage unit 301 are packaged separately and the CPU is connected with the non-volatile memory via the system bus. The processing unit 302 includes at least one of a CPU or a chip integrated with a CPU, a programmable logic device (FPGA), and a multi-core processor. The processing unit 302 also includes a storage used for temporarily storing data such as a memory, a register, and the like. There are multiple interface units 303 with different interface types. Each interface unit 303 is connected with devices, such as the exposure device and the Z-axis drive mechanism respectively, that are packaged independently in the 3D printing apparatus and transmit data through interfaces. The interface unit 303 determines an interface type according to a device to be connected, including but not limited to: a universal serial interface, a video interface, an industrial control interface, and the like. For example, the interface units 303 include: a USB interface, an HDMI interface, and an RS232 interface, wherein there are multiple USB interfaces and multiple RS232 interfaces. The control device further includes at least one of a prompting device, a human-machine interaction device, and the like. For example, the USB interface connects a human-machine interaction device or the like, and the RS232 interface connects the Z-axis drive mechanism, and the HDMI interface connects the exposure device.

The storage unit 301 is used for storing a file of the layered tooth model and a program for layering the tooth model. The tooth model includes a tooth portion model and a tooth holder portion model for supporting the tooth portion model. The processing unit 302 generates a control instruction for controlling the Z-axis drive mechanism and a layered image provided to the exposure device by running the program. Here, the control of the Z-axis drive mechanism by the processing unit 302 is implemented by transmitting the control instruction to the Z-axis drive mechanism through the corresponding interface unit 303.

Specifically, as shown in Fig. 5, the program executed by the processing unit 302 includes the following steps:
In step S110, a spacing between a component platform and a preset reference printing-surface is adjusted to fill a photocurable material to be cured.

In step S120, the photocurable material filled within the spacing is cured into a corresponding patterned cured layer according to a layered image in a tooth model.

In step S130, it is determined that whether the printing of the tooth model is finished; if not, S 110 is performed; and if so, the process is completed. By repeating the above steps, a tooth structure is formed on the component platform through accumulation of the patterned cured layers, wherein the tooth structure includes a tooth portion and a tooth holder portion for supporting the tooth portion.

Specifically, the processing unit 302 adjusts the spacing between the component platform and the reference printing-surface in the vertical direction through controlling the Z-axis drive mechanism, such that the photocurable material in the container is fluidly filled into the gap in the spacing, or the photocurable material is added into the gap by a material filling device. The size of the spacing adjusted by the processing unit 302 is controlled by an adjustment and control instruction from a technical person or is determined by a layer thickness configured in the tooth model. More specifically, during the printing of the tooth structure, the thickness of at least one patterned cured layer for forming the tooth portion is less than the thickness of at least one patterned cured layer for forming the tooth holder portion.

Here, it should be noted that, according to pre-layering of the tooth model, each cross-sectional layer of the tooth portion model does not necessarily have the same thickness, and each cross-sectional layer of the tooth holder portion model does not necessarily have the same thickness. However, in general, the thickness of each cross-sectional layer in the tooth portion model is less than the thickness of each cross-sectional layer in the tooth holder portion model. In view of this, correspondingly, the thickness of at least one patterned cured layer of the printed tooth portion is less than the thickness of at least one patterned cured layer of the printed tooth holder portion.

Or, the tooth model includes an intersecting cross-sectional layer marker between the tooth portion model and the tooth holder portion model, and the file of the tooth model includes the intersecting cross-sectional layer marker and layer thicknesses corresponding to each model.

In a more specific example, the processing unit 302 adjusts the spacing between the component platform and the preset reference printing-surface based on the marked thicknesses of cross-sectional layers in the file, wherein the tooth model includes a tooth portion model and a tooth holder portion model for supporting the tooth portion model; and wherein the marked thicknesses of the cross-sectional layers include: the thickness of at least one cross-sectional layer in the tooth portion model, and the thickness of at least one cross-sectional layer in the tooth holder portion model, wherein the thickness of at least one cross-sectional layer in the tooth portion model is less than the thickness of at least one cross-sectional layer in the tooth holder portion model.

For example, the tooth model has marked the thicknesses of all cross-sectional layers in the pre-layering stage, and the marked layer thicknesses are included in an attribute file or a tooth model file, the processing unit 302 obtains the thickness of each cross-sectional layers through parsing the tooth model file, and controls the Z-axis drive mechanism to adjust the spacing between the component platform and the preset reference printing-surface according to the obtained layer thickness, and controls the exposure device to irradiate with energy corresponding to layered image according to the layer thickness.

When the thickness of each cross-sectional layer in the tooth model is same, or different layer thicknesses are obtained by pre-layering as described above, as compared with the tooth holder portion, more refined printing for the tooth portion can be performed through adjusting the spacing from the component platform by the processing unit 302.

In a more specific example, the processing unit 302 externally connects a human-machine interaction device, for example, the human-machine interaction device is at least one of a keyboard, a mouse, and a touch screen, etc. When monitoring that the tooth structure attached to the component platform reaches the tooth portion, a technical person inputs a layer thickness adjustment instruction through the human-machine interaction device, and the processing unit 302 adjusts the spacing in a layered adjustment manner for the tooth portion, and performs layered image irradiation according to the adjusted spacing. Alternatively, when monitoring that the tooth structure attached to the component platform reaches the tooth holder portion, a technical person inputs another layer thickness adjustment instruction through the human-machine interaction device, and the processing unit 302 adjusts the spacing in a layered adjustment manner for the tooth holder portion, and performs layered image irradiation according to the adjusted spacing.

In another more specific example, the manner that processing unit 302 adjusts the spacing in a layered adjustment manner for the tooth portion, and performs layered image irradiation according to the adjusted spacing includes, for example, adjusting the spacing between the component platform and the preset reference printing-surface at least twice according to the thickness of each cross-sectional layer in the tooth portion model in the tooth model; and irradiating a layered image corresponding to a corresponding cross-sectional layer onto the photocurable material filled within the spacing based the adjusted spacing. For example, during printing of the tooth model as shown in Fig. 6, when printing the tooth portion, the processing unit 302 segments the thickness of at least one cross-sectional layer in the tooth portion model A1, and controls the Z-axis drive mechanism to adjust the component platform according to the segmented sub-thicknesses for many times, and controls the exposure device to expose the layered image of the corresponding cross-sectional layer for many times after each adjustment. In this way, the patterned cured layer corresponding to the indicated cross-sectional layer can be obtained by interpolation, such as linear interpolation, quadratic curve interpolation, or the like. It should be noted that, for clearly depicting the cross-sectional segment, an enlarged cross-sectional layer on the right side of Fig. 6 is lengthened deliberately with distortion, which does not indicate that a cross-sectional layer is stretched during printing.

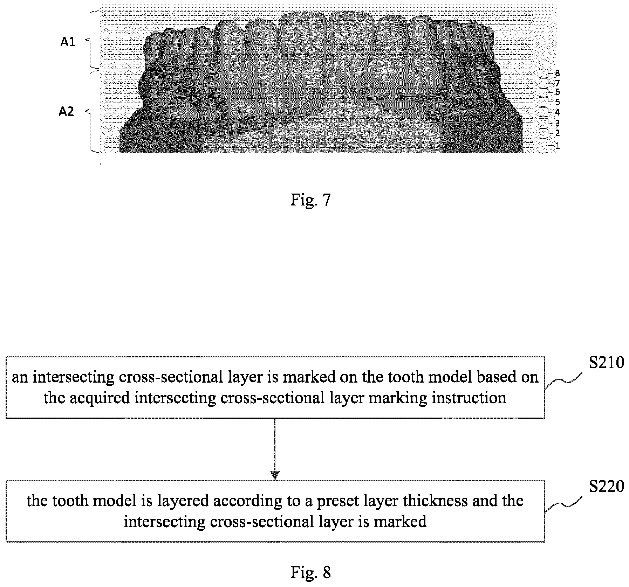

Here, the manner that processing unit 302 adjusts the spacing in a layered adjustment manner for the tooth holder portion, and performs layered image irradiation according to the adjusted spacing includes that, for example, the processing unit 302 adjusts the spacing between the component platform and the preset reference printing-surface according to the thicknesses of at least two cross-sectional layers in the tooth holder portion model; and irradiates a layered image in at least one cross-sectional layer based on which the spacing is adjusted onto the photocurable material filled within the spacing. For example, during printing of the tooth model as shown in Fig. 7, the processing unit 302 merges the thicknesses of at least two cross-sectional layers in the tooth holder portion model A2, and controls the Z-axis drive mechanism to adjust the spacing between the component platform and the reference printing-surface according to the merged layer thickness, and provides at least one layered image in the merged cross-sectional layers to the exposure device so as to increase the printing speed of the patterned cured layer. It should be noted that the marked layer thicknesses of layering in Fig. 7 are only for clearly showing the layering effect instead of indicating the size of the layer thickness, and the actual thickness of the cross-sectional layer is on the order of micrometers. Moreover, the number of the merged cross-sectional layers as depicted is also merely exemplary rather than limitation of the present invention.

Wherein, the manner of irradiating a layered image in at least one cross-sectional layer based on which the spacing is adjusted onto the photocurable material filled within the spacing includes: 1) selecting one of the layered images and irradiating the selected layered image onto the photocurable material filled within the spacing, for example, selecting the uppermost layered image of the merged plurality of cross-sectional layers in a bottom-up direction of the Z axis of the model and providing it to the exposure device; or 2) superimposing layered images of all the merged cross-sectional layers and irradiating the superimposed image onto the photocurable material filled within the spacing, for example superimposing layered images of all the merged cross-sectional layers along the Z axis without translation and deflection, and providing the superimposed image to the exposure device.

Those skilled in the art can select at least one of the above manners or use a control manner derived from enlightenment of any one or a combination of above manners according to layering information provided by the actual tooth model to make the processing unit 302 to execute a corresponding control scheme so as to achieve 3D printing of the tooth structure.

In some embodiments, with any control manner described above, the thickness of each patterned cured layer for forming the tooth portion is less than the thickness of each patterned cured layer only for forming the tooth holder portion. As shown in Figs. 6 and 7, the processing unit 302 obtains, by parsing, that the thickness h1 of each cross-sectional layer in the tooth portion model including an intersecting area between a tooth and gum is same, and the thickness h2 of each cross-sectional layer in a gum portion model that does not include the intersecting area is also same, and h1 < h2; and then, it is obtained that after printing layer by layer according to the thickness of each layer, the thickness of each patterned cured layer in the gum portion that does not include the intersecting area is h2, and the thickness of each patterned cured layer in the tooth portion including the intersecting area between tooth and gum is h1.

It should be noted that to ensure that the exposure device can pattern and cure the photocurable material filled between the reference printing-surface and the component platform each time, the control device controls the exposure device to irradiate an image according to a layer thickness. Specifically, the control device controls at least one of energy, gray scale and duration for irradiating an image by the exposure device according to a layer thickness. The control device presets a corresponding relationship between a layer thickness and energy or gray scale for irradiating an image according to the type of the exposure device. For example, the exposure device includes a laser emitter, and the control device controls an output power of the laser emitter according to a corresponding relationship between a layer thickness and energy. As another example, the exposure device includes a light source array and a DMD chip, and the control device controls a gray scale of each light source for irradiating an image in the light source array according to a corresponding relationship between a layer thickness and gray scale. The control device also presets a corresponding relationship between a layer thickness and irradiation duration, or a corresponding relationship between a layer thickness and energy and irradiation duration, or a corresponding relationship between a layer thickness and gray scale and irradiation duration, and controls the exposure device to irradiate image the according to the thickness of the current layer. Here, the corresponding relationship includes but is not limited to comparison table, or a pre-established adjustment function, etc.

To provide a tooth model capable of printing a tooth portion with high precision and a high printing speed for the 3D printing apparatus, referring to Figs. 8-11, the present application further provides a method and apparatus for layering three-dimensional object data. Figs. 8-10 show flow diagrams of a method for layering three-dimensional object data provided in the present application respectively. The layering method is mainly performed by the layering apparatus. The layering apparatus is a single user equipment, or a server, wherein the user equipment includes, but is not limited to, a personal computer, and a smart terminal such as a PAD, and the user equipment is in a dental clinic and directly acquires scan data of a patient's mouth provided by a scanning device, and builds a corresponding tooth model based on the scan data. The server includes but is not limited to a single server, a server cluster, and the like.

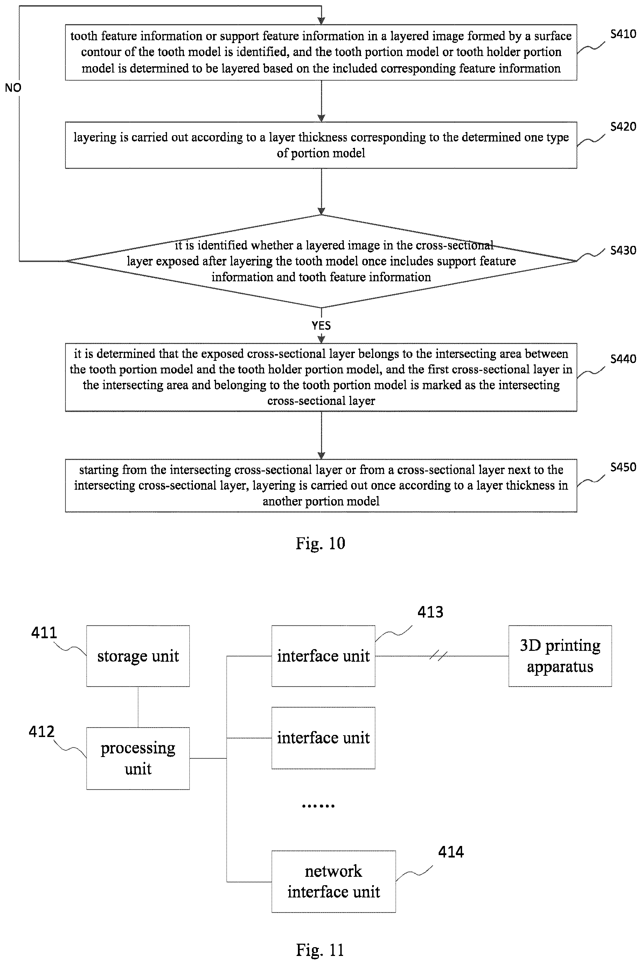

Referring to Fig. 11, the layering apparatus includes a storage unit 411 and a processing unit 412. The storage unit 411 includes a non-volatile memory and a system bus. The non-volatile memory is, for example, a solid state disk, a USB flash disk or the like. The system bus is used for connecting the non-volatile memory with a CPU, wherein the CPU is integrated in the storage unit 411, or the CPU and the storage unit 411 are packaged separately and the CPU is connected with the non-volatile memory via the system bus. The processing unit 412 includes at least one of a CPU or a chip integrated with a CPU, a programmable logic device (FPGA), and a multi-core processor. The processing unit 412 also includes a storage used for temporarily storing data such as a memory, a register, and the like. The layering apparatus further includes a network interface unit 414 and an interface unit 413, wherein the network interface unit 414 performs data communication with the 3D printing apparatus to transmit a tooth model file after layered to the 3D printing apparatus. Or, the tooth model file after layered is transferred to an external storage device (such as a USB flash disk) by means of an interface unit 413, and then transferred to the 3D printing apparatus through the external storage device.

The storage unit 411 is used for storing the tooth model and a program for layering the tooth model. The tooth model is a 3D model determined based on an image obtained through scanning a patient's mouth by a doctor. The tooth model includes a tooth portion model and a tooth holder portion model for supporting the tooth portion model. The tooth portion model is a 3D model for all or part of teeth in the mouth obtained by scanning. For example, the tooth portion model is a 3D model of an entire tooth including a crown, a neck and a root. As another example, the tooth portion model is a 3D model only including a crown and a neck. The tooth holder portion model is a support model for preventing deformation of the 3D model of the entire tooth during printing. For example, the tooth holder portion model is a rod-like support structure. For another example, the tooth holder portion model is a 3D model of a gum obtained by scanning the mouth. For example, the 3D model of the gum is arranged at a corresponding position of a neck model in the tooth portion model according to the scanned patient's image that the gum wraps the neck, and serves as the tooth holder portion model in the tooth portion model during the 3D printing. The program is invoked and executed by the processing unit 412 to layer the tooth model, and the tooth model file after layered is stored in the storage unit 411.

In order to obtain a corresponding tooth structure through layer-by-layer printing by the 3D printing apparatus, the processing unit 412 executes the program to obtain each cross-sectional layer forming the tooth model. Each cross-sectional layer describes a layered image of the tooth model at the corresponding layer. During the layering, the processing unit 412 executes at least one of the following solutions or a layering solution improved based on enlightenment of at least one of the following solutions, so that the thickness of at least one cross-sectional layer in the tooth portion model is less than the thickness of at least one cross-sectional layer in the tooth holder portion model, and/or the tooth portion model, the tooth holder portion model and an intersecting cross-sectional layer therebetween are set.

In a specific example, as shown in Fig. 8, the processing unit 412 performs steps S210 and S220.

In step S210, an intersecting cross-sectional layer is marked on the tooth model based on the acquired intersecting cross-sectional layer marking instruction.

In step S220, the tooth model is layered according to a preset layer thickness and the intersecting cross-sectional layer is marked.

Here, the layer marking instruction is obtained based on a technical person's operation on an interface about tooth model, and the layer marking instruction includes operation position information in the tooth model, and even includes a model type for distinguishing the tooth portion model and the tooth holder portion model, wherein the operation position information is represented by coordinates of the tooth model in a preset three-dimensional coordinate system. The processing unit 412 records the operation position information and takes it as an intersecting cross-sectional layer marker. For example, a technical person determines a position nearest the gum in the intersecting area between the tooth and gum in the model based on the tooth model shown by the processing unit 412, and draws a cross-sectional line or sets other marker to generate the layer marking instruction, and the processing unit 412 takes the marker of the layer marking instruction on the tooth model as an intersecting cross-sectional layer marker.

During the layering of the tooth model, the tooth model is layered with a fixed layer thickness, and the processing unit 412 takes a cross-sectional layer with the intersecting cross-sectional layer marker as the intersecting cross-sectional layer, and stores the layered tooth model and the marked intersecting cross-sectional layer in a tooth model file. The fixed layer thickness is a default value or a layer thickness set by a technical person.

Alternatively, with the marked intersecting cross-sectional layer as a boundary, the tooth portion model is layered according to layer thickness(es) in the tooth portion model, and the tooth holder portion model is layered according to layer thickness(es) in the tooth holder portion model.

Here, the processing unit 412 obtains the tooth portion model, the tooth holder portion model and the intersecting cross-sectional layer marker in the tooth model from the acquired layer marking instruction. Alternatively, the processing unit 412 determines, by identifying feature information in the upper surface and the lower surface of the placed tooth model, the tooth portion model and the tooth holder portion model in the tooth model which are bounded by the marked intersecting cross-sectional layer. The feature information is tooth feature information and support feature information. The tooth feature information includes but is not limited to: feature information based on an image of tooth cross-sectional such as corners of a contour, the number of corners, and gradient changes, tooth-related patient information such as a patient's age, gender, and tooth type, and so on. The support feature information includes but is not limited to shape and area of a contour, etc. For example, when the processing unit 412 identifies that the upper surface of the tooth model includes support feature information and the lower surface does not include support feature information, it is determined that the section between the upper surface of the tooth model and the intersecting cross-sectional layer marker is the tooth holder portion model, and the section between the intersecting cross-sectional layer marker and the lower surface is the tooth holder portion model.

After the tooth portion model and the tooth holder portion model are determined, the processing unit 412 layers the tooth portion model according to layer thickness(es) in the tooth portion model, and layers the tooth holder portion model according to layer thickness(es) in the tooth holder portion model. The layer thickness h1 in the tooth portion model and the layer thickness h2 in the tooth holder portion model are fixed values, and h1<h2. Or, the layer thickness h1 in the tooth portion model and the layer thickness h2 in the tooth holder portion model are adjusted in due time when layering is carried out one by one, but overall, the thickness of each layer in the tooth portion model is generally less than the thickness of each layer in the tooth holder portion model.

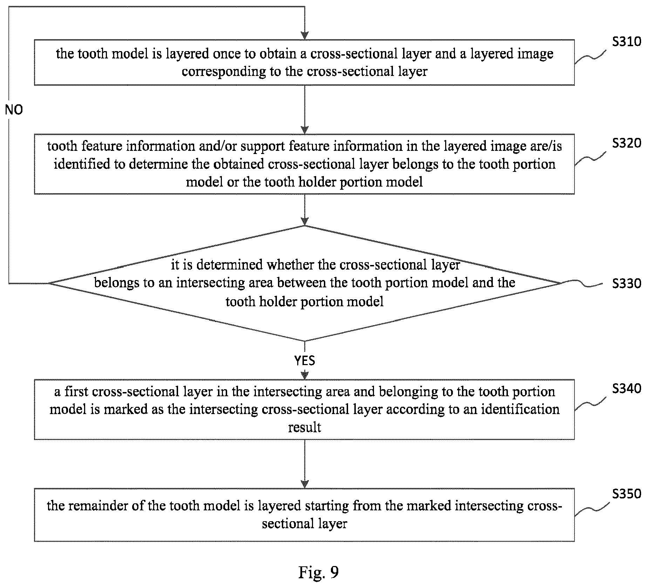

In another specific example, as shown in Fig. 9, the processing unit 412 layers the tooth model by performing the following steps.

In step S310, the tooth model is layered once to obtain a cross-sectional layer and a layered image corresponding to the cross-sectional layer.

In step S320, tooth feature information and/or support feature information in the layered image are/is identified to determine the obtained cross-sectional layer belongs to the tooth portion model or the tooth holder portion model.

In step S330, it is determined whether the cross-sectional layer belongs to an intersecting area between the tooth portion model and the tooth holder portion model; if so, step S340 is performed; and if not, steps S310 and S320 are performed repeatedly.

In step S340, a first cross-sectional layer in the intersecting area and belonging to the tooth portion model is marked as the intersecting cross-sectional layer according to an identification result.

In step S350, the remainder of the tooth model is layered starting from the marked intersecting cross-sectional layer.

Here, the processing unit 412 performs a cross-sectional layering on the tooth model for the first time, and the set layer thickness can be a preset initial value such as a preset layer thickness for partition the tooth portion model, or a uniform fixed value, etc. The processing unit 412 identifies the layered image of the obtain first cross-sectional layer according to tooth feature information or support feature information; when the identification result is that the first layered image includes tooth feature information, it is determined that the partitioned cross-sectional layer belongs to the tooth portion model; and when the identification result is that the first layered image includes support feature information, it is determined that the partitioned cross-sectional layer belongs to the tooth holder portion model.

When determining that the first cross-sectional layer belongs to the tooth portion model, the processing unit 412 continues to perform the cross-sectional layering for the second time with an uniform fixed value, and identifies whether a layered image of the second cross-sectional layer includes support feature information; if not, the steps of second cross-sectional layering and identification are repeated to continue to layer; and if so, the intersecting cross-sectional layer is marked on the previous cross-sectional layer, and the cross-sectional layering is performed on the remainder (i.e. the tooth holder portion model except the whole tooth portion model) of the tooth structure continuously.

When determining that the first cross-sectional layer belongs to the tooth holder portion model, the processing unit 412 continues to perform the cross-sectional layering for the second time with an uniform fixed value, and identifies whether a layered image of the second cross-sectional layer includes support feature information and tooth feature information, or identifies whether a layered image of the second cross-sectional layer includes tooth feature information only; if not, the steps of second cross-sectional layering and identification are repeated to continue to layer; and if so, an intersecting cross-sectional layer is marked on the current cross-sectional layer, and the cross-sectional layering is performed on the remainder (i.e. the whole tooth portion model) of the tooth structure continuously.

As shown in Fig. 10, a manner of layering the tooth model by the processing unit 412 is still described below exemplarily.

In step S410, tooth feature information or support feature information in a layered image formed by a surface contour of the tooth model is identified, and the tooth portion model or tooth holder portion model is determined to be layered based on the included corresponding feature information.

In step S420, layering is carried out according to a layer thickness corresponding to the determined one type of portion model.

In step S430, it is identified whether a layered image in the cross-sectional layer exposed after layering the tooth model once includes support feature information and tooth feature information; if not, step S420 is repeated; and if so, step S440 is performed.

In step S440, it is determined that the exposed cross-sectional layer belongs to the intersecting area between the tooth portion model and the tooth holder portion model, and the first cross-sectional layer in the intersecting area and belonging to the tooth portion model is marked as the intersecting cross-sectional layer.

In step S450, starting from the intersecting cross-sectional layer or from a cross-sectional layer next to the intersecting cross-sectional layer, layering is carried out once according to a layer thickness in another portion model. Step S450 is repeated until layering is completed.

Here, the processing unit 412 projects the upper surface or lower surface of the tooth model to a corresponding upper plane or lower plane through cross-sectional layering along the z axis, to obtain a corresponding layered image, and identifies whether the obtained layered image includes tooth feature information or support feature information; when determining tooth feature information is included, the model to be cross-sectional layered is the tooth portion model; and when determining support feature information is included, the model to be cross-sectional layered is the tooth holder portion model.

When determining to perform cross-sectional layering first on the tooth portion model, the processing unit 412 performs the cross-sectional layering one by one according to a preset cross-sectional layer thickness in the tooth portion model, and identifies whether a layered image of the cross-sectional layer includes support feature information; if not, the steps of cross-sectional layering and identification are repeated to continue to layer; and if so, an intersecting cross-sectional layer is marked on the previous cross-sectional layer, and the cross-sectional layering on the remainder of the tooth structure is continued until completed.

When determining to perform cross-sectional layering first on the tooth holder portion model, the processing unit 412 performs the cross-sectional layering one by one according to a preset cross-sectional layer thickness in the tooth holder portion model, and identifies whether a layered image of the cross-sectional layer includes support feature information and tooth feature information each time, or identifies whether the layered image includes tooth feature information only; if not, the steps of cross-sectional layering and identification are repeated to continue to layer; and if so, an intersecting cross-sectional layer is marked on the current cross-sectional layer, and the cross-sectional layering on the remainder of the tooth structure is continued until completed.

It should be noted that, unlike the other printing process of 3D components, generally for printing of a tooth and gum is in the order of the tooth first and then the gum to avoid additionally using a special support structure such as a rod-like support, and generally for printing of a single tooth and a support is in the order of the support first and then the tooth. Considering the continuity and succession of tooth and gum, that is, the tooth cannot be distributed on the support or gum in a scattered manner, therefore, in each layered image identification method, only one type of feature information is selected for identification to improve the identification efficiency. In fact, two types of feature information can be identified at the same time to improve the universality of the layering process.

It should be noted that, because the tooth holder portion model and the tooth portion model are both successive, after determining the model to which the first cross-sectional layer belongs, in order to reduce the calculation amount, the feature identification is performed on the layered images of the subsequent cross-section layers after a number of cross-section layers are formed by layering according to a preset length of the corresponding model, so as to obtain the intersecting cross-section layer. For example, after the first cross-sectional layer is determined to belong to the tooth portion model, the length of the tooth portion model is presumed according to the information such as a patient's age, tooth type and so on, and when the thickness of each cross-sectional layer formed by layering is close to the length of the tooth portion model, identification of feature information in the layered image of the cross-sectional layer is started, so as to mark the intersecting cross-sectional layer.

It also should be noted that, when determining the model to which the cross-sectional layer belongs, the thickness of the cross-sectional layer can be a fixed value, or layering can also be performed according to a layer thickness corresponding to the respective type of model, or layer thickness adjustment can be performed in due time according to a layered image or other feature in the cross-sectional layer. However, overall, the thickness of each layer in the tooth portion model is generally less than the thicknesses of each layer in the tooth holder portion model.

To facilitate the 3D printing apparatus to adjust the thickness of a cured layer according to the layer thickness in layering, the processing unit 412 marks the thickness of each cross-sectional layer by executing step S230 (not shown). In some cases, this can replace marking intersecting cross-sectional layers or supplement layer thickness information of each cross-sectional layer.

In step S230, at least one cross-sectional layer thickness marker is set for the tooth model. The cross-sectional layer thickness marker includes a layer marker (such as a layer number, Z-axis coordinates of the cross-sectional layer, etc.) of each cross-sectional layer, and also includes a layer thickness value of the corresponding cross-sectional layer. If the layer thicknesses are same, the processing unit 412 records one cross-sectional layer thickness and all layer markers. If the layer thicknesses are different layer thickness values set according to the tooth portion model and the tooth holder portion model, the processing unit 412 records cross-sectional layer thicknesses and all layer markers respectively according to model types.

## Claims

1. A 3D printing method, applied to a 3D printing apparatus, the 3D printing apparatus comprises a container (11, 21) and a component platform (12, 22), the container (11, 21) is used for containing a photocurable material, wherein, the 3D printing method comprises the following steps:
adjusting a spacing between the component platform (12, 22) and a preset reference printing-surface to fill the photocurable material to be cured (S110);
curing the photocurable material filled within the spacing into a corresponding patterned cured layer according to a layered image in a tooth model (S120); and
repeating the above steps to form a tooth structure on the component platform (12, 22) through accumulation of patterned cured layers, wherein the tooth structure comprises a tooth portion and a tooth holder portion used for supporting the tooth portion;
wherein, during a process of printing the tooth structure, a thickness of at least one patterned cured layer for forming the tooth portion is less than a thickness of at least one patterned cured layer for forming the tooth holder portion,
wherein the layered image in the tooth model is described in corresponding cross-sectional layer which is obtained by a method for layering three-dimensional object data, which comprises:
layering the tooth model to obtain cross-sectional layers forming the tooth model, wherein a layered image of the tooth model at corresponding layer is described in each cross-sectional layer;
wherein, during the layering, a thickness of at least one cross-sectional layer in the tooth portion model is set to be less than a thickness of at least one cross-sectional layer in the tooth holder portion model,
**characterized in that** the method for layering three-dimensional object data further comprises: identifying tooth feature information and support feature information in each layered image described in at least partial cross-sectional layers, and determining an intersecting cross-sectional layer between the tooth portion model and the tooth holder portion model based on an identification result.

2. The 3D printing method of Claim 1, wherein, a thickness of each patterned cured layer for forming the tooth portion is less than a thickness of each patterned cured layer only for forming the tooth holder portion.

3. The 3D printing method of Claim 1, wherein, a manner of adjusting a spacing between the component platform (12, 22) and a preset reference printing-surface to fill the photocurable material to be cured comprises:
adjusting the spacing between the component platform (12, 22) and the preset reference printing-surface based on a thickness of a cross-sectional layer marked in the tooth model, wherein the tooth model comprises a tooth portion model and a tooth holder portion model used for supporting the tooth portion model;
wherein, the marked thickness of the cross-sectional layer comprises a thickness of at least one cross-sectional layer in the tooth portion model and a thickness of at least one cross-sectional layer in the tooth holder portion model, the thickness of at least one cross-sectional layer in the tooth portion model is less than the thickness of at least one cross-sectional layer in the tooth holder portion model.

4. The 3D printing method of Claim 1, wherein, a manner of adjusting a spacing between the component platform (12, 22) and a preset reference printing-surface to fill the photocurable material to be cured comprises:
adjusting the spacing between the component platform (12, 22) and the preset reference printing-surface at least twice according to a thickness of each cross-sectional layer in the tooth portion model in the tooth model; and/or
adjusting the spacing between the component platform (12, 22) and the preset reference printing-surface according to thicknesses of at least two cross-sectional layers in the tooth holder portion model in the tooth model.

5. The 3D printing method of Claim 4, wherein, a manner of curing the photocurable material filled within the spacing into a corresponding patterned cured layer according to a layered image in a tooth model comprises:
irradiating a layered image corresponding to at least one cross-sectional layer based on which the spacing is adjusted onto the photocurable material filled within the spacing.

6. A 3D printing apparatus, comprising:
a container (11, 21), used for containing a photocurable material;
a component platform (12, 22), used for attaching a patterned cured layer obtained after irradiation to form a 3D component through accumulation of patterned cured layers;
a Z-axis drive mechanism (13, 23), connected with the component platform (12, 22) and used for adjusting a spacing between the component platform (12, 22) and a preset reference printing-surface in a controlled manner to fill the photocurable material to be cured;
an exposure device (14, 24), used for curing the photocurable material filled within the spacing into a corresponding patterned cured layer according to a layered image in a tooth model to form a corresponding tooth structure, wherein the tooth structure comprises a tooth portion and a tooth holder portion for supporting the tooth portion; and
a control device (15, 25), connected with the Z-axis drive mechanism (13, 23) and used for controlling the Z-axis drive mechanism (13, 23) to adjust the spacing, and satisfying the following conditions during the control of the Z-axis drive mechanism (13, 23) to adjust the spacing: a thickness of at least one patterned cured layer for forming the tooth portion is less than a thickness of at least one patterned cured layer for forming the tooth holder portion;
the control device (15, 25) is also connected with the exposure device (14, 24) and is used for controlling the exposure device (14, 24) to irradiate a corresponding layered image,
wherein the 3D printing apparatus is configured to receive the corresponding layered image from an apparatus for layering three-dimensional object data, which comprises:
a storage unit (411), configured to store the tooth model;
a processing unit (412), configured to layer the stored tooth model to obtain cross-sectional layers forming the tooth model, wherein a layered image of the tooth model at corresponding layer is described in each cross-sectional layer;
wherein, during the layering by the processing unit (412), a thickness of at least one cross-sectional layer in the tooth portion model is set to be less than a thickness of at least one cross-sectional layer in the tooth holder portion model;
**characterized in that** the processing unit (412) is further configured to:
identify tooth feature information and support feature information in each layered image of at least partial layered images; and
determine an intersecting cross-sectional layer between the tooth portion model and the tooth holder portion model based on an identification result.

7. The 3D printing apparatus of Claim 6, wherein, a thickness of each patterned cured layer for forming the tooth portion is less than a thickness of each patterned cured layer only for forming the tooth holder portion.

8. The 3D printing apparatus of Claim 6, wherein, the control device (15, 25) comprises a storage unit (301), the storage unit (301) is configured to store a file of the layered tooth model, wherein the tooth model comprises a tooth portion model and a tooth holder portion model for supporting the tooth portion model.

9. The 3D printing apparatus of Claim 8, wherein, the storage unit (301) is further configured to store a cross-sectional layer thickness marker and/or a marker of a model to which a cross-sectional layer belongs, wherein the cross-sectional layer thickness marker is used for identifying a thickness of at least one cross-sectional layer in the tooth portion model; the thickness of at least one cross-sectional layer in the tooth portion model is less than the thickness of at least one cross-sectional layer in the tooth holder portion model;
the control device (15, 25) further comprises a processing unit (302), the processing unit (302) is configured to adjust the spacing between the component platform (12, 22) and the preset reference printing-surface based on the stored cross-sectional layer thickness marker and/or marker of a model to which a cross-sectional layer belongs.

10. The 3D printing apparatus of Claim 8, wherein, the storage unit (301) is further configured to store an intersecting cross-sectional layer marker, the intersecting cross-sectional layer marker is used for identifying an intersecting cross-sectional layer between the tooth portion model and the tooth holder portion model;
the control device (15, 25) further comprises a processing unit (302), the processing unit is configured to adjust the spacing between the component platform (12, 22) and the preset reference printing-surface based on the tooth portion model in the tooth model determined by the intersecting cross-sectional layer and a thickness of each cross-sectional layer in the tooth portion model; and adjust the spacing between the component platform (12, 22) and the preset reference printing-surface based on the tooth holder portion model in the tooth model determined by the intersecting cross-sectional layer and thicknesses of at least two cross-sectional layers in the tooth holder portion model and the intersecting cross-sectional layer.

11. The 3D printing apparatus of Claim 6, wherein, the control device (15, 25) is further used to control the exposure device (14, 24) to irradiate an image based on the adjusted spacing.

## Patentansprüche

1. 3D-Druck-Verfahren, welches auf eine 3D-Druck-Vorrichtung angewendet wird, wobei die 3D-Druck-Vorrichtung einen Behälter (11, 21) und eine Komponenten-Plattform (12, 22) umfasst, wobei der Behälter (11, 21) zur Aufnahme eines photohärtbaren Materials verwendet wird, wobei das 3D-Druck-Verfahren die folgenden Schritte umfasst:
Einstellen eines Zwischenraums zwischen der Komponenten-Plattform (12, 22) und einer voreingestellten Referenz-Druckfläche, um das zu härtende photohärtbare Material zu füllen (S110);
Härten des photohärtbaren Materials, welches in den Zwischenraum gefüllt worden ist, in eine entsprechende gemusterte gehärtete Schicht gemäß einem geschichteten Bild in einem Zahnmodell (S120), und
Wiederholen der obigen Schritte, um durch Akkumulation gemusterter gehärteter Schichten eine Zahnstruktur an der Komponenten-Plattform (12, 22) zu bilden, wobei die Zahnstruktur einen Zahnabschnitt und einen Zahnhalterabschnitt umfasst, welcher zum Haltern des Zahnabschnitts verwendet wird;
wobei, während eines Prozesses eines Druckens der Zahnstruktur, eine Dicke wenigstens einer gemusterten gehärteten Schicht zum Bilden des Zahnabschnitts geringer als eine Dicke wenigstens einer gemusterten gehärteten Schicht zum Bilden des Zahnhalterabschnitts ist,
wobei das geschichtete Bild in dem Zahnmodell in einer entsprechenden Querschnittsschicht beschrieben wird, welche durch ein Verfahren zur Schichtung dreidimensionaler Objektdaten erhalten wird, welches umfasst:
Schichten des Zahnmodells, um Querschnittsschichten zu erhalten, welche das Zahnmodell bilden, wobei in jeder Querschnittsschicht ein geschichtetes Bild des Zahnmodells an einer entsprechenden Schicht beschrieben wird;
wobei, während des Schichtens, eine Dicke wenigstens einer Querschnittsschicht in dem Zahnabschnittsmodell derart festgelegt wird, dass sie geringer als eine Dicke wenigstens einer Querschnittsschicht in dem Zahnhalterabschnittmodel ist,
**dadurch gekennzeichnet, dass** das Verfahren zum Schichten dreidimensionaler Objektdaten ferner umfasst:
Identifizieren von Zahnmerkmalsinformationen und Halterungsmerkmalsinformationen in jedem geschichteten Bild, welches in wenigstens Teilquerschnittsschichten beschrieben wird, und Bestimmen einer Schnittquerschnittsschicht zwischen dem Zahnabschnittsmodell und dem Zahnhalterabschnittsmodell auf Grundlage eines Identifikationsergebnisses.

2. 3D-Druck-Verfahren nach Anspruch 1, wobei eine Dicke jeder gemusterten gehärteten Schicht für ein Bilden des Zahnabschnitts geringer als eine Dicke jeder gemusterten gehärteten Schicht nur für ein Bilden des Zahnhalterabschnitts ist.

3. 3D-Druck-Verfahren nach Anspruch 1, wobei eine Art und Weise eines Einstellens eines Zwischenraums zwischen der Komponenten-Plattform (12, 22) und einer voreingestellten Referenzdruckfläche, um das zu härtende photohärtbare Material zu füllen, umfasst:
Einstellen des Zwischenraums zwischen der Komponenten-Plattform (12, 22) und der voreingestellten Referenzdruckfläche auf Grundlage einer Dicke einer Querschnittsschicht, welche in dem Zahnmodell markiert ist, wobei das Zahnmodell ein Zahnabschnittsmodell und ein Zahnhalterabschnittsmodell umfasst, welches zum Haltern des Zahnabschnittsmodells verwendet wird ;
wobei die markierte Dicke der Querschnittsschicht eine Dicke wenigstens einer Querschnittsschicht in dem Zahnabschnittsmodell und eine Dicke wenigstens einer Querschnittsschicht in dem Zahnhalterabschnittsmodell umfasst, wobei die Dicke wenigstens einer Querschnittsschicht in dem Zahnabschnittsmodell geringer als die Dicke wenigstens einer Querschnittsschicht in dem Zahnhalterabschnittsmodell ist.

4. 3D-Druck-Verfahren nach Anspruch 1, wobei eine Art und Weise eines Einstellens eines Zwischenraums zwischen der Komponenten-Plattform (12, 22) und einer voreingestellten Referenzdruckfläche, um das zu härtende photohärtbare Material zu füllen, umfasst:
Einstellen des Zwischenraums zwischen der Komponenten-Plattform (12, 22) und der voreingestellten Referenzdruckfläche wenigstens zweimal gemäß einer Dicke jeder Querschnittsschicht in dem Zahnabschnittsmodell in dem Zahnmodell; und/oder
Einstellen des Zwischenraumes zwischen der Komponenten-Plattform (12, 22) und der voreingestellten Referenzdruckfläche gemäß einer Dicke wenigstens zweier Querschnittsschichten in dem Zahnhalterabschnittsmodell in dem Zahnmodell.

5. 3D-Druck-Verfahren nach Anspruch 4, wobei eine Art und Weise eines Härtens des photohärtbaren Materials, welches in den Zwischenraum gefüllt ist, in eine entsprechende gemusterte gehärtete Schicht gemäß einem geschichteten Bild in einem Zahnmodell umfasst:
Bestrahlen eines geschichteten Bildes gemäß wenigstens einer Querschnittsschicht, auf Grundlage von welcher der Zwischenraum eingestellt wird, auf das photohärtbare Material, welches in den Zwischenraum gefüllt ist.

6. 3D-Druck-Vorrichtung, umfassend:
einen Behälter (11, 21), welcher zum Aufnehmen eines photohärtbaren Materials verwendet wird;
eine Komponenten-Plattform (12, 22), welche zum Anbringen einer gemusterten gehärten Schicht verwendet wird, welche nach einer Bestrahlung erhalten worden ist, um durch eine Akkumulation gemusterter gehärteter Schichten eine 3D-Komponente zu bilden;
einen Z-Achse-Antriebsmechanismus (13, 23), welcher mit der Komponenten-Plattform (12, 22) verbunden ist und dazu verwendet wird, einen Zwischenraum zwischen der Komponenten-Plattform (12, 22) und einer voreingestellten Referenzdruckfläche in einer gesteuerten Weise einzustellen, um das härtende photohärtbare Material zu füllen;
eine Belichtungsvorrichtung (14, 24), welche verwendet wird, um das photohärtbare Material, welches in den Zwischenraum gefüllt ist, in eine entsprechende gemusterte gehärtete Schicht gemäß einem geschichteten Bild in einem Zahnmodell zu härten, um eine entsprechende Zahnstruktur zu bilden, wobei die Zahnstruktur einen Zahnabschnitt und einen Zahnhalterabschnitt zum Haltern des Zahnabschnitts umfasst;
eine Steuervorrichtung (15, 25), welche mit dem Z-Achse-Antriebsmechanismus (13, 23) verbunden ist und dazu verwendet wird, den Z-Achse-Antriebsmechanismus (13, 23) zu steuern, um den Zwischenraum einzustellen, und während der Steuerung des Z-Achse-Antriebsmechanismus (13, 23), um den Zwischenraum einzustellen, die folgenden Bedingungen erfüllt: eine Dicke wenigstens einer gemusterten gehärteten Schicht zum Bilden des Zahnabschnitts ist geringer als eine Dicke wenigstens einer gemusterten gehärteten Schicht zum Bilden des Zahnhalterabschnitts;
wobei die Steuervorrichtung (15, 25) ebenfalls mit der Belichtungsvorrichtung (14, 24) verbunden ist und verwendet wird, um die Belichtungsvorrichtung (14, 24) zu steuern, um ein entsprechendes geschichtetes Bild zu bestrahlen,
wobei die 3D-Druck-Vorrichtung dazu eingerichtet ist, das entsprechende geschichtete Bild von einer Vorrichtung zum Schichten dreidimensionaler Objektdaten zu empfangen, welche umfasst:
eine Speichereinheit (411), welche dazu eingerichtet ist, das Zahnmodell zu speichern;
eine Verarbeitungseinheit (412), welche dazu eingerichtet ist, dass gespeicherte Zahnmodell zu schichten, um Querschnittsschichten zu erhalten, welche das Zahnmodell bilden, wobei in jeder Querschnittsschicht ein geschichtetes Bild des Zahnmodells an einer entsprechenden Schicht beschrieben ist;
wobei, während des Schichtens durch die Verarbeitungseinheit (412), eine Dicke wenigstens einer Querschnittsschicht in dem Zahnabschnittsmodell derart festgelegt wird, dass sie geringer als eine Dicke wenigstens einer Querschnittsschicht in dem Zahnhalterabschnittmodel ist,
**dadurch gekennzeichnet, dass** die Verarbeitungseinheit (412) ferner eingerichtet ist zum:
Identifizieren von Zahnmerkmalsinformationen und Halterungsmerkmalsinformationen in jedem geschichteten Bild von wenigstens teilweise geschichteten Bildern, und
Bestimmen einer Schnittquerschnittsschicht zwischen dem Zahnabschnittsmodell und dem Zahnhalterabschnittsmodell auf Grundlage eines Identifikationsergebnisses.

7. 3D-Druck-Vorrichtung nach Anspruch 6, wobei eine Dicke jeder gemusterten gehärteten Schicht für ein Bilden des Zahnabschnitts geringer als eine Dicke jeder gemusterten gehärteten Schicht nur für ein Bilden des Zahnhalterabschnitts ist.

8. 3D-Druck-Vorrichtung nach Anspruch 6, wobei die Steuervorrichtung (15, 25) eine Speichereinheit (301) umfasst, wobei die Speichereinheit (301) dazu eingerichtet ist, eine Datei des geschichteten Zahnmodells zu speichern, wobei das Zahnmodell ein Zahnabschnittsmodell und ein Zahnhalterabschnittsmodell zum Haltern des Zahnabschnittsmodells umfasst.

9. 3D-Druck-Vorrichtung nach Anspruch 8, wobei die Speichereinheit (301) ferner dazu eingerichtet ist, eine Querschnittsschicht-Dickenmarkierung und/oder eine Markierung eines Modells zu speichern, zu welcher eine Querschnittsschicht gehört, wobei die Querschnittsschicht-Dickenmarkierung verwendet wird, um eine Dicke wenigstens einer Querschnittsschicht in dem Zahnabschnittsmodell zu identifizieren; wobei die Dicke wenigstens einer Querschnittsschicht in dem Zahnabschnittsmodell geringer als die Dicke wenigstens einer Querschnittsschicht in dem Zahnhalterabschnittsmodell ist;
die Steuervorrichtung (15, 25) ferner eine Verarbeitungseinheit (302) umfasst, wobei die Verarbeitungseinheit (302) dazu eingerichtet ist, den Zwischenraum zwischen der Komponenten-Plattform (12, 22) und der voreingestellten Referenzdruckfläche auf Grundlage der gespeicherten Querschnittsschicht-Dickenmarkierung und/oder Markierung eines Modells einzustellen, zu welcher eine Querschnittsschicht gehört.

10. 3D-Druck-Vorrichtung nach Anspruch 8, wobei die Speichereinheit (301) ferner dazu eingerichtet ist, eine Schnittquerschnittsschicht-Markierung zu speichern, wobei die Schnittquerschnittsschicht-Markierung verwendet wird, um eine Schnittquerschnittsschicht zwischen dem Zahnabschnittsmodell und dem Zahnhalterabschnittsmodell zu identifizieren;
die Steuervorrichtung (15, 25) ferner eine Verarbeitungseinheit (302) umfasst, wobei die Verarbeitungseinheit (302) dazu eingerichtet ist, den Zwischenraum zwischen der Komponenten-Plattform (12, 22) und der voreingestellten Referenzdruckfläche auf Grundlage des Zahnabschnittsmodells in dem Zahnmodell einzustellen, welches durch die Schnittquerschnittsschicht und eine Dicke jeder Querschnittsschicht in dem Zahnabschnittsmodell bestimmt worden ist; und den Zwischenraum zwischen der Komponenten-Plattform (12, 22) und der voreingestellten Referenzdruckfläche auf Grundlage des Zahnhalterabschnittsmodells in dem Zahnmodell einzustellen, welches durch die Schnittquerschnittsschicht und die Dicken wenigstens zweier Querschnittsschichten in dem Zahnhalterabschnittsmodell und die Schnittquerschnittsschicht bestimmt worden ist.

11. 3D-Druck-Vorrichtung nach Anspruch 6, wobei die Steuervorrichtung (15, 25) ferner verwendet wird, um die Belichtungsvorrichtung (14, 24) derart zu steuern, dass sie auf Grundlage des eingestellten Zwischenraums ein Bild bestrahlt.

## Revendications

1. Procédé d'impression 3D, appliqué à un appareil d'impression 3D, l'appareil d'impression 3D comprend un récipient (11, 21) et une plate-forme de composant (12, 22), le récipient (11, 21) est utilisé pour contenir un matériau photodurcissable, dans lequel le procédé d'impression 3D comprend les étapes suivantes :
l'ajustement d'un espacement entre la plate-forme de composant (12, 22) et une surface d'impression de référence préréglée pour remplir le matériau photodurcissable à durcir (S110) ;
le durcissement du matériau photodurcissable rempli à l'intérieur de l'espacement dans une couche durcie à motif correspondante en fonction d'une image en couches dans un modèle de dent (S 120) ; et
la répétition des étapes ci-dessus pour former une structure de dent sur la plate-forme de composant (12, 22) par accumulation de couches durcies à motif, dans lequel la structure de dent comprend une portion de dent et une portion de support de dent utilisée pour supporter la portion de dent ;
dans lequel, au cours d'un processus d'impression de la structure de dent, une épaisseur d'au moins une couche durcie à motif pour former la portion de dent est inférieure à une épaisseur d'au moins une couche durcie à motif pour former la portion de support de dent,
dans lequel l'image en couches dans le modèle de dent est décrite dans une couche en coupe transversale correspondante qui est obtenue par un procédé de mise en couches de données d'objet en trois dimensions, qui comprend :
la mise en couches du modèle de dent pour obtenir des couches en coupe transversale formant le modèle de dent, dans lequel une image en couches du modèle de dent à une couche correspondante est décrite dans chaque couche en coupe transversale,
dans lequel, au cours de la mise en couches, une épaisseur d'au moins une couche en coupe transversale dans le modèle de portion de dent est réglée pour être inférieure à une épaisseur d'au moins une couche en coupe transversale dans le modèle de portion de support de dent,
**caractérisé en ce que**
le procédé pour la mise en couches de données d'objet en trois dimensions comprend en outre :
l'identification d'informations de caractéristique de dent et d'informations de caractéristique de support dans chaque image en couches décrite dans des couches en coupe transversale au moins partielles, et la détermination d'une couche en coupe transversale d'intersection entre le modèle de portion de dent et le modèle de portion de support de dent sur la base d'un résultat d'identification.

2. Procédé d'impression 3D selon la revendication 1, dans lequel une épaisseur de chaque couche durcie à motif pour former la portion de dent est inférieure à une épaisseur de chaque couche durcie à motif uniquement pour former la portion de support de dent.

3. Procédé d'impression 3D selon la revendication 1, dans lequel une manière d'ajuster un espacement entre la plate-forme de composant (12, 22) et une surface d'impression de référence préréglée pour remplir le matériau photodurcissable à durcir comprend :
l'ajustement de l'espacement entre la plate-forme de composant (12, 22) et la surface d'impression de référence préréglée sur la base d'une épaisseur d'une couche en coupe transversale marquée dans le modèle de dent, dans lequel le modèle de dent comprend un modèle de portion de dent et un modèle de portion de support de dent utilisé pour supporter le modèle de portion de dent ;
dans lequel l'épaisseur marquée de la couche en coupe transversale comprend une épaisseur d'au moins une couche en coupe transversale dans le modèle de portion de dent et une épaisseur d'au moins une couche en coupe transversale dans le modèle de portion de support de dent, l'épaisseur d'au moins une couche en coupe transversale dans le modèle de portion de dent est inférieure à l'épaisseur d'au moins une couche en coupe transversale dans le modèle de portion de support de dent.

4. Procédé d'impression 3D selon la revendication 1, dans lequel une manière d'ajuster un espacement entre la plate-forme de composant (12, 22) et une surface d'impression de référence préréglée pour remplir le matériau photodurcissable à durcir comprend :
l'ajustement de l'espacement entre la plate-forme de composant (12, 22) et la surface d'impression de référence préréglée au moins deux fois en fonction d'une épaisseur de chaque couche en coupe transversale dans le modèle de portion de dent dans le modèle de dent ; et/ou
l'ajustement de l'espacement entre la plate-forme de composant (12, 22) et la surface d'impression de référence préréglée en fonction d'épaisseurs d'au moins deux couches en coupe transversale dans le modèle de portion de support de dent dans le modèle de dent.

5. Procédé d'impression 3D selon la revendication 4, dans lequel une manière de durcir le matériau photodurcissable rempli à l'intérieur de l'espacement dans une couche durcie à motif correspondante en fonction d'une image en couches dans un modèle de dent comprend :
l'irradiation d'une image en couches correspondant à au moins une couche en coupe transversale sur la base de laquelle l'espacement est ajusté sur le matériau photodurcissable rempli à l'intérieur de l'espacement.

6. Appareil d'impression 3D, comprenant :
un récipient (11, 21) utilisé pour contenir un matériau photodurcissable ;
une plate-forme de composant (12, 22) utilisée pour fixer une couche durcie à motif obtenue après irradiation pour former un composant 3D par accumulation de couches durcies à motif ;
un mécanisme d'entraînement d'axe Z (13, 23) relié à la plate-forme de composant (12, 22) et utilisé pour ajuster un espacement entre la plate-forme de composant (12, 22) et une surface d'impression de référence préréglée d'une manière commandée pour remplir le matériau photodurcissable à durcir ;
un dispositif d'exposition (14, 24) utilisé pour durcir le matériau photodurcissable rempli à l'intérieur de l'espacement dans une couche durcie à motif correspondante en fonction d'une image en couches dans un modèle de dent pour former une structure de dent correspondante, dans lequel la structure de dent comprend une portion de dent et une portion de support de dent pour supporter la portion de dent ; et
un dispositif de commande (15, 25) relié au mécanisme d'entraînement d'axe Z (13, 23) et utilisé pour commander le mécanisme d'entraînement d'axe Z (13, 23) afin d'ajuster l'espacement, et satisfaire les conditions suivantes pendant la commande du mécanisme d'entraînement d'axe Z (13, 23) pour ajuster l'espacement : une épaisseur d'au moins une couche durcie à motif pour former la portion de dent est inférieure à une épaisseur d'au moins une couche durcie à motif pour former la portion de support de dent ;
le dispositif de commande (15, 25) est également relié au dispositif d'exposition (14, 24) et est utilisé pour commander au dispositif d'exposition (14, 24) d'irradier une image en couches correspondante,
dans lequel l'appareil d'impression 3D est configuré pour recevoir l'image en couches correspondante depuis un appareil de mise en couches de données d'objet en trois dimensions, comprenant :
une unité de stockage (411) configurée pour stocker le modèle de dent ;
une unité de traitement (412) configurée pour mettre en couches le modèle de dent stocké pour obtenir des couches en coupe transversale formant le modèle de dent, dans lequel une image en couches du modèle de dent à une couche correspondante est décrite dans chaque couche en coupe transversale ;
dans lequel, au cours de la mise en couches par l'unité de traitement (412), une épaisseur d'au moins une couche en coupe transversale dans le modèle de portion de dent est réglée pour être inférieure à une épaisseur d'au moins une couche en coupe transversale dans le modèle de portion de support de dent ;
**caractérisé en ce que** l'unité de traitement (412) est en outre configurée pour :
identifier des informations de caractéristique de dent et des informations de caractéristique de support dans chaque image en couches d'images en couches au moins partielles ; et
déterminer une couche en coupe transversale d'intersection entre le modèle de portion de dent et le modèle de portion de support de dent sur la base d'un résultat d'identification.

7. Appareil d'impression 3D selon la revendication 6, dans lequel une épaisseur de chaque couche durcie à motif pour former la portion de dent est inférieure à une épaisseur de chaque couche durcie à motif uniquement pour former la portion de support de dent.

8. Appareil d'impression 3D selon la revendication 6, dans lequel le dispositif de commande (15, 25) comprend une unité de stockage (301), l'unité de stockage (301) est configurée pour stocker un fichier du modèle de dent en couches, dans lequel le modèle de dent comprend un modèle de portion de dent et un modèle de portion de support de dent pour supporter le modèle de portion de dent.

9. Appareil d'impression 3D selon la revendication 8, dans lequel l'unité de stockage (301) est configurée pour stocker un marqueur d'épaisseur de couche en coupe transversale et/ou un marqueur d'un modèle auquel la couche en coupe transversale appartient, dans lequel le marqueur d'épaisseur de couche en coupe transversale est utilisé pour identifier une épaisseur d'au moins une couche en coupe transversale dans le modèle de portion de dent ; l'épaisseur d'au moins une couche en coupe transversale dans le modèle de portion de dent est inférieure à l'épaisseur d'au moins une couche en coupe transversale dans le modèle de portion de support de dent ;
le dispositif de commande (15, 25) comprend en outre une unité de traitement (302), l'unité de traitement (302) est configurée pour ajuster l'espacement entre la plate-forme de composant (12, 22) et la surface d'impression de référence préréglée sur la base du marqueur d'épaisseur de couche en coupe transversale stocké et/ou du marqueur d'un modèle auquel une couche en coupe transversale appartient.

10. Appareil d'impression 3D selon la revendication 8, dans lequel l'unité de stockage (301) est en outre configurée pour stocker un marqueur de couche en coupe transversale d'intersection, le marqueur de couche en coupe transversale d'intersection est utilisé pour identifier une couche en coupe transversale d'intersection entre le modèle de portion de dent et le modèle de portion de support de dent ;
le dispositif de commande (15, 25) comprend en outre une unité de traitement (302), l'unité de traitement est configurée pour ajuster l'espacement entre la plate-forme de composant (12, 22) et la surface d'impression de référence préréglée sur la base du modèle de portion de dent dans le modèle de dent déterminé par la couche en coupe transversale d'intersection et une épaisseur de chaque couche en coupe transversale dans le modèle de portion de dent ; et ajuster l'espacement entre la plate-forme de composant (12, 22) et la surface d'impression de référence préréglée sur la base du modèle de portion de support de dent dans le modèle de dent déterminé par la couche en coupe transversale d'intersection et des épaisseurs d'au moins deux couches en coupe transversale dans le modèle de portion de support de dent et la couche en coupe transversale d'intersection.

11. Appareil d'impression 3D selon la revendication 6, dans lequel le dispositif de commande (15, 25) est en outre utilisé pour commander au dispositif d'exposition (14, 24) d'irradier une image sur la base de l'espacement ajusté.
